# DEMANDE DE BREVET EUROPEEN

(11) **EP 1 016 474 A1**
(43) Date de publication de la demande: **05.07.2000**
(21) Numéro de dépôt: 99125146.3
(22) Date de dépôt: 16.12.1999
(51) Int. Cl.: B21D 53/30

(54) **Procédé de fabrication d'une jante anodisée de bicyclette et jante obtenue par la mise en oeuvre du procédé**

(30) Priorité: 18.12.1998 FR 9816292
(71) Demandeur: MAVIC S.A., 01990 Saint-Trivier sur Moignans (FR)
(72) Inventeur: Minville, Alban, 71570 Romaneche Thorins (FR)
(74) Mandataire: Lejeune, Benoit

(57) **Abrégé**

L'invention concerne un procédé de fabrication d'une jante anodisée de bicyclette comprenant les étapes de cintrage et découpe d'un profilé (1) selon un cerceau dont les extrémités (13, 14) sont en regard l'une de l'autre, de soudure des deux extrémités par étincelage et d'anodisation.

Le procédé est caractérisé par le fait que l'étape d'anodisation est réalisée avant le cintrage du profilé en barre, et que l'on ménage sur le cerceau anodisé avant soudure, au moins à proximité de chacune des extrémités au moins une zone (7, 8) électriquement conductrice à la surface externe du cerceau.

L'invention concerne également une jante anodisée obtenue par la mise en oeuvre du procédé. La jante est caractérisée par le fait qu'elle présente au niveau de la soudure un cordon non anodisé de largeur relativement régulière.

## Description

L'invention concerne un procédé de fabrication d'une jante anodisée de bicyclette. L'invention concerne également une jante obtenue par la mise en oeuvre du procédé.

De façon connue, une jante de bicyclette est réalisée à partir d'un profilé en barre en alliage d'aluminium. Généralement, la barre est cintrée selon des spires, puis coupée de façon à former un cerceau ou plus. Les extrémités des cerceaux sont assemblées bout à bout. Parmi les techniques d'assemblage connues, l'invention s'applique plus particulièrement aux jantes dont les deux extrémités du cerceau sont soudées par étincelage. Cette opération est réalisée en appliquant les deux extrémités l'une contre l'autre et en faisant circuler un courant électrique de forte intensité, de façon à provoquer la fusion locale des deux extrémités et leur liaison intime. Ensuite, le bourrelet de soudure est ébavuré. Eventuellement, les flancs de la jante sont usinés.

En finition, la jante est anodisée, c'est-à-dire qu'elle est trempée dans une succession de bains. Ce traitement de surface rend le matériau de la jante plus résistant en surface. En outre, en fonction des composants chimiques utilisés, il permet de donner à la jante un aspect de surface brillant ou mat et une couleur.

Un but de l'invention est de proposer un nouveau procédé de fabrication d'une jante qui soit plus économique et plus facile à mettre en oeuvre.

Le procédé de fabrication d'une jante anodisée de bicyclette selon l'invention comprend les étapes de cintrage et découpe d'un profilé en barre selon un cerceau dont les extrémités sont en regard l'une de l'autre, de soudure des deux extrémités entre elles et d'anodisation. Il est caractérisé par le fait que l'étape d'anodisation est réalisée avant le cintrage dudit profilé, et que l'on ménage sur le cerceau anodisé avant soudure, au moins à proximité de chacune des extrémités au moins une zone électriquement conductrice.

La jante anodisée de bicyclette selon l'invention est obtenue à partir d'un cerceau dont les deux extrémités sont soudées. Elle est caractérisée par le fait qu'elle présente dans la zone de la soudure un cordon non anodisé qui s'étend selon la section transversale de la jante.

Il est connu de cintrer des barres de profilé anodisées pour réaliser des jantes dont les extrémités sont assemblées par manchonnage. Cependant, comme la surface de la jante devient non conductrice du fait de l'anodisation, on pensait jusqu'à présent qu'on ne pouvait pas souder les extrémités d'un cerceau déjà anodisé. En plus, on pensait que dans la zone du joint, la chaleur dégagée par la soudure dégraderait trop la couche anodisée, ce qui nuirait à l'aspect esthétique de la jante.

Selon l'invention, on réalise le cintrage de barres déjà anodisées. On ménage des zones électriquement conductrices à proximité des extrémités ou bien en protégeant ces zones avant anodisation, ou bien par un usinage local du cerceau après anodisation.

L'invention sera mieux comprise en se référant à la description ci-dessous et aux dessins en annexe qui en font partie intégrante.
La figure 1 illustre l'étape préliminaire d'anodisation d'un profilé en barre.
La figure 2 schématise l'étape de préparation du profilé en barre selon un premier mode de mise en oeuvre de l'invention.
La figure 3 représente en section le profilé de la figure 2 après préparation.
La figure 4 représente un cerceau de jante vu de côté, après cintrage et avant soudure.
La figure 5 schématise l'étape de soudure.
La figure 6 montre le cerceau de la jante après soudure.
La figure 7 montre le cerceau de jante au stade après usinage du cordon de soudure.
La figure 8 schématise une variante de mise en oeuvre de l'invention.
La figure 9 montre le pincement d'une extrémité du cerceau selon la variante de la figure 8.
La figure 10 montre le pincement d'une extrémité du cerceau selon une autre variante de mise en oeuvre de l'invention.
La figure 11 illustre une autre variante de réalisation.

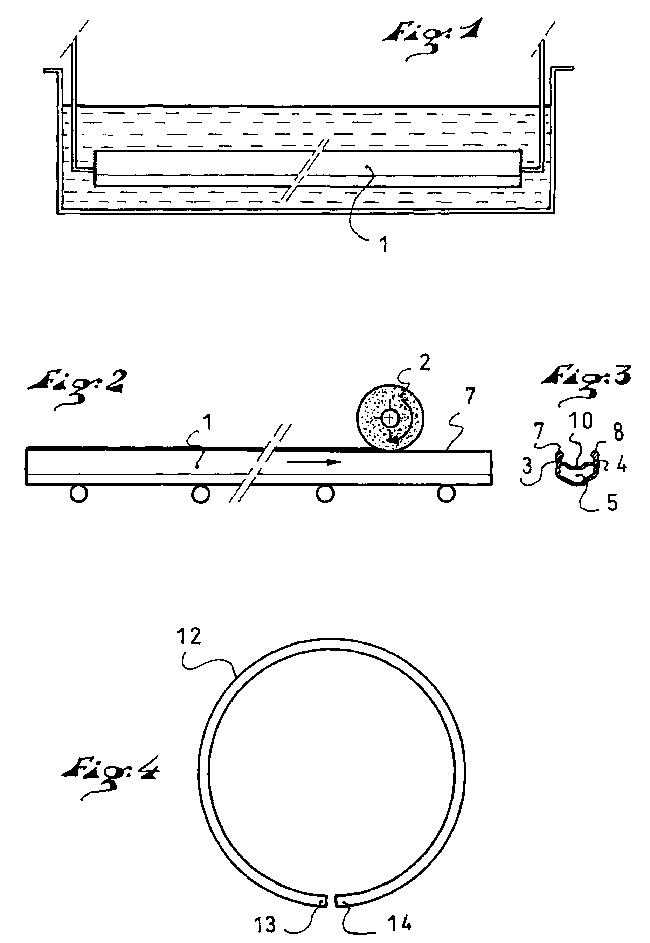

La figure 1 illustre de façon schématique l'étape d'anodisation d'un profilé en barre 1. De façon connue, le profilé 1 est une barre rectiligne qui présente en section la forme désirée d'une section de la jante et dont la longueur est légèrement supérieure à un multiple de la circonférence d'une jante. En règle générale, une barre de profilé permet de réaliser entre une et quatre jantes.

L'opération d'anodisation est d'un type connu. Après des phases de préparation de l'état de surface, de dégraissage de rinçage, elle comprend une phase d'oxydation électrochimique qui forme une couche d'alumine à la surface externe du profilé. C'est cette phase qui est schématisée dans la figure. Le profilé en baffe 1 est plongé dans le bain électrolytique, par exemple un bain d'acide sulfurique. Le profilé est maintenu à ses extrémités par un support qui assure par ailleurs le passage du courant électrique.

Après les phases suivantes de rinçage, séchage et le cas échéant de coloration, on crée à la surface du profilé en barre 1 des surfaces électriquement conductrices. Il est en effet connu que le traitement d'anodisation produit une couche isolante à la surface de la jante, ou tout au moins une couche dont la conductivité est totalement aléatoire.

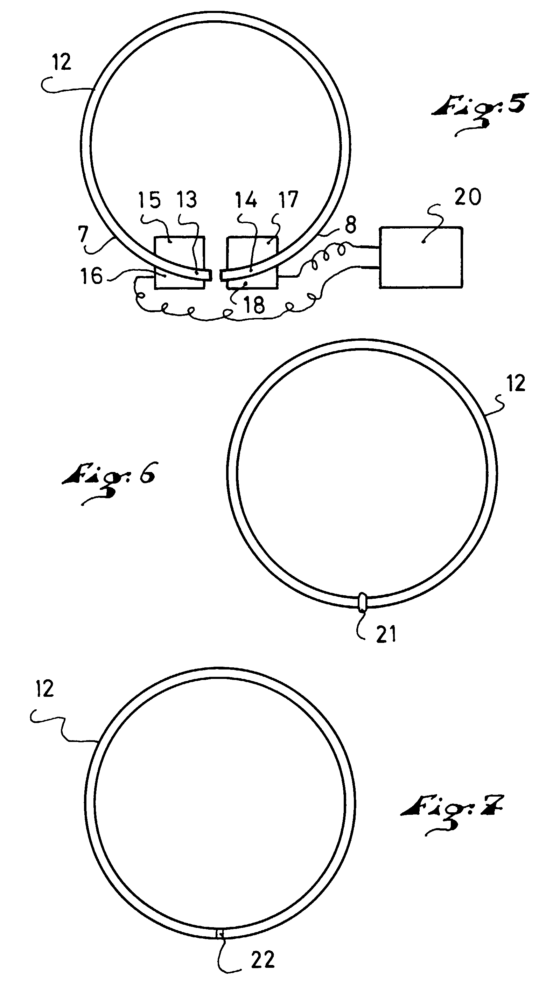

La figure 2 schématise une opération d'émerisage où le profilé en barre 1 est convoyé sous une meule 2 qui élimine la couche superficielle d'anodisation au sommet des ailes du profilé.

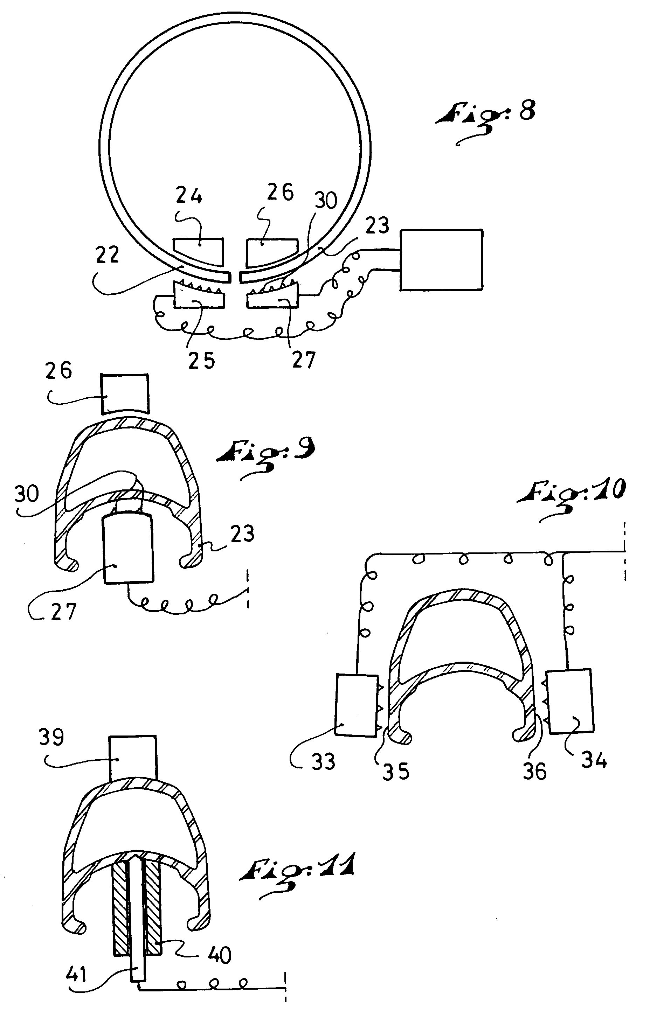

La figure 3 représente en section le profilé après cette opération. De façon classique, le profilé comprend deux ailes latérales 3 et 4 , un caisson central 5. Au sommet des ailes, dans les zones repérées en 7 et 8, l'alliage d'aluminium n'est plus protégé par la couche d'alumine qui s'était formée au cours de l'étape d'anodisation. Ces zones sont redevenues électriquement conductrices.

Le résultat de ces étapes de préparation est une barre de profilé 1 qui est anodisée en surface sauf dans les zones 7 et 8.

On pourrait arriver à un résultat semblable par des variantes de mise en oeuvre de l'invention. Par exemple, on pouffait réaliser un émerisage dans d'autres zones que le sommet des ailes, par exemple au niveau du pont supérieur 10 de la jante. Ensuite, au lieu de réaliser un décapage de la couche anodisée sur toute la longueur de la barre, on pouffait le réaliser de façon locale, à proximité des extrémités des segments de profilé qui seront obtenus après découpe de la barre.

On pourrait aussi obtenir les surfaces conductrices en masquant certaines zones de la jante avant l'anodisation au moyen d'un masque protecteur, et en découvrant ces zones ensuite.

Les zones sont localisées de telle façon que lorsque la baffe sera découpée et cintrée en cerceau, le cerceau de la jante présente à proximité de chacune de ses extrémités au moins une zone non anodisée. Ces zones électriquement conductrices seront reliées à la source de courant pour réaliser la soudure.

Dans l'étape suivante, la barre 1 est cintrée et découpée en cerceaux de jante. Par exemple tel que cela se pratique couramment, la barre est cintrée en spires, généralement entre deux et quatre spires, puis l'ensemble est découpé transversalement. Chaque spire forme alors un cerceau ouvert 12 dont les deux extrémités 13 et 14 se présentent en regard l'une de l'autre.

En variante de ce qui vient d'être décrit, on pouffait réaliser l'étape d'émerisage en même temps que le cintrage ou la découpe. Pour cela, on pourrait par exemple placer une meule sur la machine de cintrage et profiter du mouvement de la baffe ou du cerceau pour décaper des zones anodisées de la jante. La meule peut être placée avant les galets de cintrage, entre les galets ou après eux. On pouffait également accoupler un moyen de décapage avec la scie qui découpe les spires en cerceaux, de façon à décaper localement les extrémités du cerceau avec le mouvement de sciage.

La figure 5 illustre l'étape suivante de soudure. De façon connue, cette opération consiste à relier les deux extrémités du cerceau à une source de courant de forte intensité, et à les mettre au contact l'une de l'autre de façon à provoquer un court-circuit. A titre indicatif, on fait circuler un courant électrique de l'ordre de 2.000 à 3.000 ampères. L'échauffement induit par le court-circuit provoque une fusion locale de la matière des deux extrémités qui s'assemblent entre elles. Eventuellement, on peut prévoir préalablement à la soudure de sertir des inserts à l'intérieur du caisson aux deux extrémités de la jante de façon à contrôler l'effondrement de la matière. A cause de la découpe, les deux surfaces d'extrémité du cerceau sont mises à nu, et de ce fait elles sont électriquement conductrices.

Comme cela est illustré dans la figure 5, les deux extrémités 13 et 14 du cerceau sont pincées entre les mors 15-16, 17-18 de deux mâchoires. Les mors inférieurs 16 et 18 sont reliés à une source de courant électrique schématisée en 20. Il faut noter que les mors 16 et 18 sont en contact avec les zones 7 et 8 de la jante qui ont été préalablement décapées. Par serrage des mors sur la jante, on assure donc un bon contact électrique entre les mors 16 et 18 et les extrémités de la jante. Il est important de ménager une zone électrique de grande surface et de bonne conductivité entre les mors et la jante, de façon qu'il ne se produise aucun arc électrique à ce niveau, ce qui aurait pour effet de détériorer la jante.

Dans le mode de réalisation illustré, le serrage des mors à chacune des extrémités du cerceau produit une application de l'un des mors contre la zone conductrice du cerceau. On obtient donc un bon contact électrique.

Etant donné que les mors serrent uniquement les extrémités du cerceau, il est suffisant que la jante présente une zone électriquement conductrice à proximité de chacune de ses extrémités.

Les deux mâchoires sont rapprochées l'une de l'autre de façon que les extrémités du cerceau entrent en contact l'une de l'autre, et le passage du courant est provoqué pour une période de temps déterminée.

Après soudure, comme cela est schématisé en figure 6, les deux extrémités du cerceau sont jointes, et un bourrelet 21 s'est formé au niveau du joint de soudure.

La jante est ébarbée dans cette zone, par exemple au moyen d'une fraise de façon à réduire le bourrelet de soudure. Cette opération laisse apparaître en final un simple cordon 22 qui affleure le reste de la jante, qui présente une largeur régulière de l'ordre de 2 à 3 millimètres et qui s'étend selon la section de la jante. De façon surprenante en effet, la soudure des deux extrémités du cerceau n'a pas détérioré le revêtement d'anodisation au-delà des limites du cordon qui est réalisé par usinage sur une largeur réduite de façon à réduire le bourrelet. Sur la surface du cordon, la couche d'anodisation est absente. Toutefois, compte tenu de sa largeur réduite et de la relative régularité de sa largeur, il ne pose pas de problème d'esthétique particulier. En outre, la visibilité de ce cordon dépend de la teinte que l'anodisation a donnée au reste de la jante. Dans le cas où la jante est anodisée avec une coloration naturelle, le cordon 22 est à peine visible. Dans le cas où la jante est colorée, on peut prévoir de masquer le cordon par une peinture ou un vernis de même teinte. On peut également prévoir dans les deux cas de masquer ce cordon par une étiquette, ou de l'intégrer dans la décoration de la jante.

De façon connue, le cerceau de jante peut subir ensuite des opérations d'usinage des flancs, de perçages d'orifices pour les oeillets de rayons etc.. Selon une autre technique de montage des rayons, on peut aussi percer le pont inférieur de la jante par refoulement de façon à créer des cheminées qui sont ensuite usinées.

L'invention est avantageuse dans la mesure où l'opération d'anodisation est réalisée non plus sur les cerceaux de jante, mais sur les profilés en barre. De ce fait, cette opération d'anodisation est plus simple à mettre en oeuvre et plus économique à réaliser.

Dans le mode de mise en oeuvre de l'invention qui a été décrit, les zones 7 et 8 de la jante sont également dépourvues de couche anodisée en surface. D'un point de vue anodisation, ceci n'est pas réellement gênant dans la mesure où un alliage d'aluminium s'oxyde naturellement avec le temps. D'un point de vue esthétique, ces zones sont masquées par le pneumatique après son montage.

Selon une variante de mise en oeuvre de l'invention, les zones électriquement conductrices sont crées lors du pincement des extrémités du cerceau au moment de la soudure. Pour cela, on utilise des mors de mâchoire avec des poinçons ou des stries qui traversent localement la couche superficielle d'anodisation et établissent la connexion électrique avec la masse de l'aluminium. Les surfaces de la jante dont la couche d'anodisation est ainsi perforée localement sont par exemple le pont supérieure et / ou la surface intérieure des ailes, ou bien encore les surfaces de freinage sachant que ces surfaces seront réusinées dans la suite.

Les figures 8 et 9 illustrent un premier mode de mise en oeuvre de cette variante. Les extrémités 22 et 23 du cerceau sont pincées entre les mors 24, 25, 26 et 27 de deux mâchoires. Pour simplifier les explications, les mors sont représentés dans une position écartée. Les mors pincent les extrémités de la jante depuis l'intérieur et l'extérieur du cerceau. Les mors 24 et 25 prennent appui contre le pont inférieur. Les mors 25 et 27 qui sont reliés à la source de courant électrique 29 sont prévus pour s'appuyer contre le pont supérieur, entre les deux ailes. Comme le représente schématiquement la figure 9 pour le mors 27, les mors 25 et 27 sont revêtus d'une pluralité de poinçons ou de picots 30 qui sont prévus pour perforer localement la couche d'anodisation du pont supérieur pour établir la continuité électrique avec la masse de l'aluminium. En fait, la couche d'anodisation a une épaisseur de l'ordre de 15 microns. Il suffit d'une déformation minime pour transpercer cette couche. En variante, les mors 25 et 27 pourraient appuyer sur l'intérieur des ailes.

La perforation locale de ces surfaces n'est pas gênante étant donné qu'elles seront masquées ensuite par le pneu. En plus, le pont supérieur est protégé par le fond de jante.

La figure 10 montre une autre variante selon laquelle les mors 33 et 34 avec leurs poinçons pincent les surfaces latérales 35 et 36 d'une extrémité de la jante.

La perforation de la couche d'aluminium se fait comme dans le cas précédent.

Dans la suite, les traces que cette perforation aura provoquées seront effacées avec l'opération qui consiste à usiner les surfaces de freinage.

A la place des poinçons, il serait possible de mettre en oeuvre des stries ou tout autre relief approprié apte à perforer localement la couche d'anodisation.

La figure 11 est relative à une autre variante. Selon cette variante, chacune des extrémités du cerceau est immobilisée dans les mors 39, 40 d'une mâchoire. Contrairement au cas précédent, les mors ne sont pas directement reliés à une source de courant. C'est un poinçon 41, qui est planté par exemple dans le pont supérieur et qui établit la connexion électrique à ce niveau. Comme cela est représenté, le poinçon peut être guidé dans l'un des mors. Il est propulsé par tout moyen approprié, par exemple un vérin pneumatique. Le poinçon 41 est planté suffisamment profondément dans le pont supérieur pour établir une connexion de bonne qualité. On peut prévoir qu'il transperce le pont pour avoir une sorte d'emmanchement à force qui favorise la connexion électrique.

Naturellement, la présente description n'est donnée qu'à titre indicatif, et l'on pourrait adopter d'autres mises en oeuvre de l'invention sans pour autant sortir du cadre de celle-ci.

En particulier, pour une jante dont les flancs sont usinés, on pourrait réaliser un premier usinage superficiel des flancs à proximité des extrémités du cerceau de façon à rétablir la conductivité électrique, et réaliser ensuite un second usinage des flancs sur toute la périphérie de la jante de façon à obtenir les surfaces de freinage lisses, le second usinage effaçant les traces du premier.

Egalement, pour l'étape de soudure, on pourrait dissocier les mors de la mâchoire qui assurent le contact électrique et les mors qui assurent le mouvement de rapprochement des deux extrémités du cerceau.

D'autres variantes de mise en oeuvre sont encore possibles.

## Revendications

1. Procédé de fabrication d'une jante anodisée de bicyclette comprenant les étapes de cintrage et découpe d'un profilé en baffe (1) selon un cerceau dont les extrémités (13, 14) sont en regard l'une de l'autre, de soudure des deux extrémités par étincelage et d'anodisation, caractérisé par le fait que l'étape d'anodisation est réalisée avant le cintrage dudit profilé, et que l'on ménage sur le cerceau anodisé avant soudure, au moins à proximité de chacune des extrémités au moins une zone (7, 8) électriquement conductrice à la surface externe du cerceau.

2. Procédé selon la revendication 1, caractérisé par le fait que les zones électriquement conductrices (7, 8) sont réalisées après anodisation du profilé en barre (1) par émerisage.

3. Procédé selon la revendication 2, caractérisé par le fait que les zones électriquement conductrices (7, 8) sont réalisées au sommet des ailes (3, 4) de la jante.

4. Procédé selon la revendication 1, caractérisé par le fait que les zones électriquement conductrices sont réalisées avant l'anodisation par un masque protecteur.

5. Procédé selon la revendication 1, caractérisé par le fait que les zones électriquement conductrices sont réalisées lors du pincement de la jante au moment de la soudure.

6. Procédé selon la revendication 5, caractérisé par le fait que les extrémités de la jante sont pincées entre des mors (24, 25, 26, 27, 33, 34) pourvus d'une pluralité de poinçons ou picots (30) qui transpercent localement la couche superficielle d'anodisation.

7. Procédé selon la revendication 5, caractérisé par le fait que chacune des extrémités de la jante est pincée entre les mors (39, 40) d'une mâchoire et qu'un poinçon (41) électriquement conducteur est planté dans une paroi des extrémités.

8. Procédé selon la revendication 1, caractérisé par le fait que les mors de la mâchoire de soudure qui sont reliés à la source de courant sont appliqués contre les zones électriquement conductrices (7, 8) à proximité des extrémités du cerceau.

9. Procédé selon la revendication 1, caractérisé par le fait que l'on ébarbe le bourrelet de soudure (21).

10. Jante anodisée de bicyclette obtenue à partir d'un cerceau (12) dont les deux extrémités (13, 14) sont soudées, caractérisée par le fait qu'elle présente dans la zone de la soudure un cordon (22) non anodisé de largeur relativement régulière qui s'étend selon la section transversale de la jante.

11. Jante selon la revendication 10, caractérisée par le fait que le cordon présente une largeur de 2 à 3 millimètres.

12. Jante selon la revendication 10, caractérisée par le fait que le cordon (22) est masqué par une peinture, un vernis ou une étiquette.
